Europäisches Patentamt

European Patent Office

Office européen des brevets

(19)

(11) **EP 1 143 651 A1**

(12) **EUROPEAN PATENT APPLICATION**
published in accordance with Art. 158(3) EPC

(43) Date of publication:
**10.10.2001 Bulletin 2001/41**

(51) Int Cl.⁷: **H04J 13/04**, H04B 1/707

(21) Application number: **00957040.9**

(22) Date of filing: **08.09.2000**

(86) International application number:
**PCT/JP00/06138**

(87) International publication number:
**WO 01/22637 (29.03.2001 Gazette 2001/13)**

(84) Designated Contracting States:
**DE FR GB**

(30) Priority: **17.09.1999 JP 26425199**

(71) Applicants:
• **TOYO COMMUNICATION EQUIPMENT CO. LTD.**
**Kouza-gun, Kanagawa 253-0192 (JP)**
• **Daiei Electronics Co., Ltd.**
**Hachioji-shi, Tokyo 193-0834 (JP)**
• **Kuroyanagi, Noriyoshi**
**Higashiyamato-shi, Tokyo 207-0022 (JP)**
• **Suehiro, Naoki**
**Tsukuba-shi, Ibaraki 305-0031 (JP)**

(72) Inventors:
• **KUROYANAGI, Noriyoshi**
**Higashiyamato-shi Tokyo 207-0022 (JP)**
• **SUEHIRO, Naoki**
**Tsukuba-shi Ibaraki 305-0031 (JP)**
• **MATSUFUJI, Shinya**
**Saga-shi Saga 840-0054 (JP)**
• **FAN, Pingzhi**
**Chengdu Sichuan 610031 (CN)**

(74) Representative: **Grosse, Wolfgang, Dipl.-Ing.**
**Patentanwälte**
**Herrmann-Trentepohl**
**Grosse - Bockhorni & Partner,**
**Forstenrieder Allee 59**
**81476 München (DE)**

(54) **CDMA COMMUNICATION SYSTEM EMPLOYING CODE SEQUENCE SET HAVING NON-CROSS CORRELATION REGION**

(57)     According to a CDMA communication system of the invention, a transmitter comprises means for preparing binary ZCCZ spreading sequence belonging to a family of sequence group in which a periodic cross correlation function between an arbitrary pair of spreading sequences has a no cross correlation function region near 0 shift, means for creating an expanded symbol frame having protective sequence added to both sides of a central frame, with the ZCCZ sequence as the central frame, and means for creating a transmission base band frame by multiplying the transmission information and expanded symbol frame, and a receiver comprises means for demodulating the reception frame in correlation by using the ZCCZ spreading sequence used by a transmitter of a desired station or location sequence for demodulation as reference sequence, and hard judging the demodulation output.

Fig. 2

EP 1 143 651 A1

**Description**

TECHNICAL FIELD

The present invention relates to a direct sequence spread spectrum (DS-SS) communication system, and more particularly to a code division multiple access (CDMA) communication system, capable of avoiding interference and disturbance caused by multiplex communications by employing an expanded binary spreading sequence set (ZCCZ sequence family) so that the correlation characteristics of the spreading sequences being used may have a zero correlation zone (ZCZ), and also enhancing the frequency utilization efficiency.

BACKGROUND ART

Spread spectrum communication is to send transmission data on a relatively narrow band spectrum by spreading the spectrum to a wide frequency band by modulating the spreading sequence by the transmission data, and it is an excellent communication system having many features including small transmission power per unit frequency, relatively small interference to other communication, and satisfactory tolerance to environmental noise by mixing it in the transmission process, that is, general incoming noise and interference noise coming in from other mobile stations or interference stations than the desired station. However, since communications from multiple stations have to share the same band, disturbance due to interference noise is dominant.

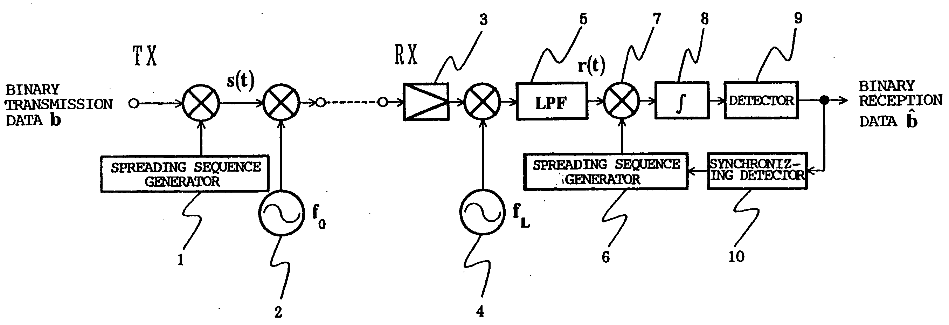

Fig. 12 is a block diagram showing a general configuration of a mobile communication system for spread spectrum communication through a wireless communication path, in which a transmitter TX modulates a spreading sequence by binary transmission data b to obtain base band transmission output s(t). The sequence is generated by a spreading sequence generator 1. The output s(t) modulates the carrier of frequency $f_0$ generated by an oscillator 2. TX transmits the modulated output as a transmission wave to a receiver RX through a wireless communication path. As the spreading sequence, it is general to use pseudo-noise (PN) sequence of the same length (number of chips in sequence) as the length of the data b. Since Gold sequences (G sequence) having many types of code words are well known, and used widely among various PN sequences, the explanation is described below with G sequences.

The receiver RX guides the received signal to an amplifier 3 through an antenna (not shown here). Amplifier 3 amplifies it to a specific level, and mixes the amplified signal and local signal $f_L$ (frequency and phase of $f_L$ coinciding with $f_0$) applied to a local oscillator 4, and produces a received base band signal r(t) through a low pass filter 5. This is coherent demodulation.

This base band spread signal and the same spreading sequence code (G sequence) as the code used in the transmitter TX generated from a spreading sequence generator 6 are put into a multiplier 7, the product output of multiplier 7 is integrated over the period (one symbol frame portion) of G sequence by an integrator 8, and a matched filter output is obtained. That is, multiplier 7 and integrator 8 makes a correlator for optimum demodulation. The output of integrator 8 is detected by a detector 9 at a final point of the symbol frame, by comparing with a threshold level for hard decision, to produce a binary data ^b. (In this specification, the hat and tilde provided on the top of a symbol are regarded the same as those provided before a symbol.) A control signal produced by using this detected data is put into a control terminal of spreading sequence generator 6 through a synchronizing detector 10, and the generation timing of G sequence is controlled so as to be synchronized in phase with the received signal. In receiver RX shown in Fig. 12, the multiplication function by the local oscillator 4 and spreading sequence generator 6 is often replaced, but the entire demodulation function is exactly the same.

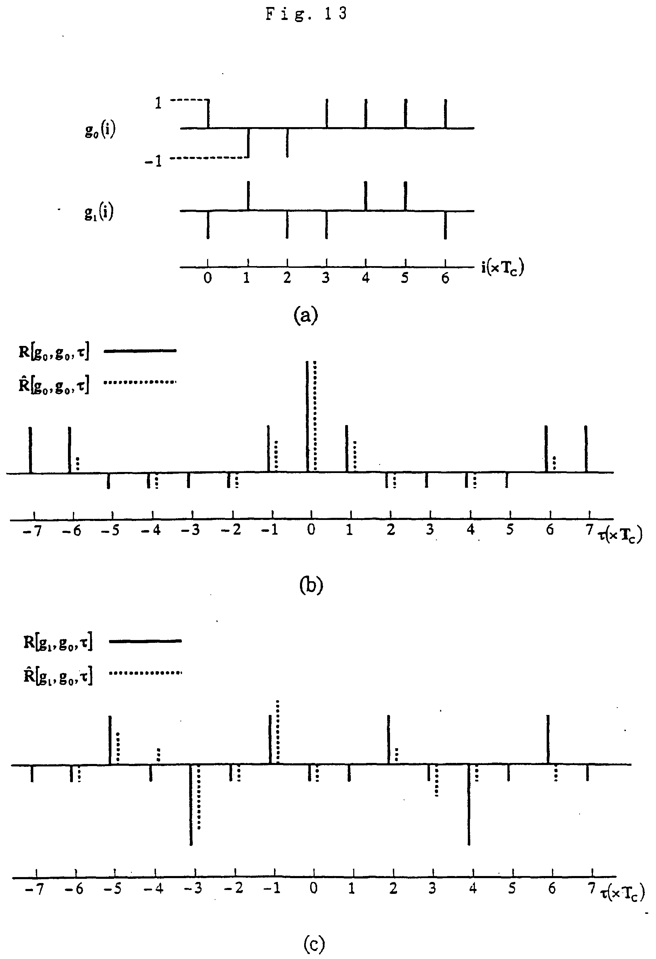

Supposing examples of two G sequences to be $g_0(i)$ and $g_1(i)$, they are shown in Fig. 13 (a), where i is a time variable showing the i-th chip position. Since G sequence is a binary sequence, the symbol frame waveform is, supposing the sequence length L, a binary L chip impulse sequence (actually, as the chip waveform, instead of impulse without energy, a square wave or a sampling function waveform is used; in the diagram, however, each chips is illustrated by an impulse). As the binary value, usually ±1(V) is used, and +1 and -1 are expressed as + and - herein.

The auto-correlation function (ACF) and aperiodic auto-correlation function (AACF) of $g_0(i)$ are shown in Fig. 13 (b), and the cross correlation function (CCF) and aperiodic cross correlation function (ACCF) between $g_0(i)$ and $g_1$ (i) are shown in Fig. 13 (c). On the axis of abscissas in the diagram, $\tau$ is a shift variable taking an integer.

Supposing the binary transmission information of a desired station $u_0$ to be $b_{0n}$ (n = ..., -1, 0, 1, 2, ...), its transmission wave (base band waveform) is $b_{0n}g_0(i)$, but multiple delayed waves (including preceding waves) are generated by the multi-path effect in the transmission process. Among them, usually, the received wave (synchronously received symbol frame) synchronized with the strongest wave in power coming from the desired station is received, and then demodulated. In this demodulation process, the delayed waves become auto-interference waves. When the preceding and present frames carry information of the same polarity (with respect to the preceding transmission data $b_{0-1}$ and present transmission data $b_{00}$), disturbance corresponding to the auto-correlation function (ACF) takes place. On the other hand, if different in polarity ($b_{0-1} \cdot b_{00} = -1$), disturbance corresponding to two aperiodic auto-correlation functions (AACF) (corresponding to odd auto-correlation) takes place.

Received waves [composed of $b_1 g_1(i)$, its delayed waves, and preceding waves] corresponding to a transmitted wave from an interference station $u_1$ included in the received frame synchronized with that coming from the desired station are co-channel interference. In this case, when the preceding frame ($b_{1-1} g_1(i)$) and present frame ($b_{10} g_1(i)$) are of the same polarity ($b_{1-1} b_{10} = 1$), it is called even cross correlation, and interface corresponding to cross-correlation function (CCF) takes place. In the case of different polarities ($b_{1-1} b_{10} = -1$), it is called odd-cross correlation, and interference corresponding to two aperiodic cross-correlation functions (ACCF) take place.

The shift time $\tau$ (axis of abscissas) of respective correlation functions correspond to the time difference between the synchronously received frame and interference frame. From the characteristics in Fig. 13 (b) and (c), it is known that the absolute correlation value is of considerably large. Actually, supposing the number of system users K and the number of multi-paths including desired wave (2M+1), if limited only to the case of even correlation, the number of interference frames generating auto-correlation is 2M and the number of interference frames generating cross correlation is (K-1)(2M+1). If limited to the case of odd correlation only, both the numbers are doubled.

Therefore, summing up the values in Fig. 13 (b), (c) corresponding to the polarity of respective transmission data, the whole interference due to multiple waves is obtained. When the interference amplitude distribution is given, the rate of exceeding the threshold (the correlation value corresponding to the synchronously received frame addressed to the desired station coming into the receiver) increases as K and M increase, thereby increasing the bit error rate. In CDMA communication systems, generally, the service area is divided into plural cells, and a base station in each cell communicates with the users belonging to the cell via up- and down-links, but the up- (down-) links of all the cells use the same frequency band. Therefore, the base station receiver receives waves transmitted by users in adjacent cells as interference noise, being subjected to the disturbance.

To avoid interference disturbance, a means of decreasing the number of users K per cell or a technique of "convolutional coding" in addition to spreading sequence are employed. If the convolutional coding rate is $r_c = 1/3$, the symbol frame length increases to substantially ($L/r_c$) chips. The decrease in K or in $r_c$ directly results in reducing the frequency utilization efficiency of the system. Therefore, the problem is that the number of chips of present systems required to send one bit [the measure of (chips/bit) will be mentioned later] is extremely larger than 1.

It is hence an object of the invention to present technology capable of realizing a system free from interference component such as auto-interference, co-channel interference or inter-cell interference, or a system capable of decreasing the interference component remarkably, by designing particular sequence families and using them.

DISCLOSURE OF THE INVENTION

To solve the problems, according to the invention as set forth in the first aspect, a transmitter comprises means for preparing binary ZCCZ spreading sequences belonging to a family of sequence groups in which no periodic cross correlation function between an arbitrary pair of the spreading sequences exists for a correlation function region near 0 shift, as mutually different spreading sequences for identifying users, means for producing an expanded symbol frame which is made by adding guard sequences to both sides of the ZCCZ sequence that is the central frame, and means for producing a transmission base band symbol frame by multiplying the expanded symbol frame by a transmission information, and a receiver comprises means for receiving the received base band symbol frame corresponding to the transmitted base band symbol frame, and means for demodulating the received frame in correlation with the ZCCZ spreading sequence used by the transmitter of a desired station or a local sequence for demodulation as reference sequence, and hard decision making of the demodulated output.

The invention as set forth in the second aspect relates to the first aspect, in which each user transmitter belonging to a communication system comprises means for transmitting an isolated pilot frame, and a base station receiver comprises means for producing respective cross correlation function responses of the isolated pilot frames incoming from the user transmitters with an arbitrary spreading sequence or an auto-orthogonal sequence, and means for producing a demodulated output by analyzing the received base band frame with the cross correlation function response set.

The invention as set forth in the third aspect comprises, in order to produce the ZCCZ spreading sequence used in the first aspect, means for preparing one sequence of sequence length $N_1$ belonging to a ZCZ sequence family of which periodic auto-correlation function has no auto-correlation region at both sides of the 0 shift, and of which periodic cross-correlation function between an arbitrary pair of sequences has no correlation region at both sides of the 0 shift, including the 0 shift, and for preparing a block sequence d with sequence length $N_2$ that is prime to $N_1$, which belongs a semi-orthogonal sequence family of which Hamming distance between an arbitrary pair of the sequences takes a relatively large value, and producing a repetitive ZCZ sequence and a repetitive block sequence by repeating both sequences so as to take a product sequence length N that is $N_1$ times $N_2$, and producing in advance a product sequence with sequence length N by multiplying both the repetitive sequences on the respective corresponding chip positions, in which the product sequence is used as the ZCCZ spreading sequence.

The invention as set forth in the fourth aspect relates to the third aspect, in which a product sequence $S_{kp}{}^j$ is assigned to a system in a method of making the block sequence d hierarchical with a sub-block matrix $H_p{}^*$ (p = 1, 2, ..., P), producing a family of product sequence $S_{kp}{}^j$ made of the j-th (j = 1, 2, ..., J) block sequence $d_{pj}$ belonging to $H_p{}^*$ and the k-th (k = 1, 2, ..., K) ZCZ sequence $C_k$ belonging to the ZCZ sequence family, and providing the stratified family elements k, p, and j with the system elements of cell number, user number, and transmission information level in an arbitrary order.

The invention as set forth in the fifth aspect relates to the fourth aspect, in which product sequence $S_{kp}{}^j$ is assigned to the system in a method of providing a combined family composed of one to three elements of stratified family elements k, p, j with one system element, and a combined family composed of the remaining elements with other system elements.

The invention as set forth in a sixth aspect relates to the fourth or fifth aspect, in which the sequence corresponding to the family element assigned to the cell number of system elements is used as scramble code for transmission and descramble code for reception.

BRIEF DESCRIPTION OF THE DRAWINGS

Fig. 1 (a) is a diagram showing received symbol frame sequences, (b) is a diagram showing a composition of an expanded frame, and (c) is a diagram showing a composition of expanded frame sequences.

Fig. 2 (a) is a diagram sowing a transmitter base band circuit in an embodiment of the invention, and (b) is a diagram showing a receiver base band circuit.

Fig. 3 (a) is a diagram showing a correlation characteristic having a zero correlation region, relating to cross correlation characteristic (k≠k') between different partial sets, (b) is a diagram showing a correlation characteristic having a zero correlation region, relating to cross correlation characteristic (j≠j') between same partial sets, and (c) is a diagram showing a correlation characteristic having a zero correlation region, relating to auto-correlation characteristic.

Fig. 4 (a) is a diagram showing an example of composition of 4-ZCZ sequence C, and (b) is a diagram showing an example of composition of its periodic correlation R.

Fig. 5 (a) is a diagram showing an orthogonal cord H, and (b) is a diagram showing a block code d.

Fig. 6 is a diagram showing an example of composition of set S of 4-ZCZ sequence.

Fig. 7 is a diagram showing periodic correlation characteristics of a set S in Fig. 6.

Fig. 8 (a) is a diagram showing 2-ZCZ sequence C, and (b) is a diagram showing its periodic correlation.

Fig. 9 is a diagram showing an example composition of a diagonal matrix element set of binary block code.

Fig. 10 is a diagram sowing a hierarchical structure of 2-ZCZ sequence.

Fig. 11 (a) is a diagram showing a transmitter base band circuit having an isolated pilot response analyzing function in a second embodiment of the invention, and (b) is a diagram showing a receiver base band circuit.

Fig. 12 is a circuit showing a transmitter and receiver circuit for direct sequence spread spectrum communication.

Fig. 13 (a) is a diagram showing Gold sequence, (b) is a diagram showing periodic and aperiodic auto-correlation functions, and (c) is a diagram showing periodic and aperiodic cross-correlation functions.

BEST MODE FOR CARRYING OUT THE INVENTION

«ZCZ sequence family characteristic»

In order to avoid interference including effects of delay waves, it is preferred to design a set of spreading codes in which the auto-correlation function (ACF) is an ideal pulse and the cross correlation function (CCF) has an ideal zero value, but this is impossible. It is, however, possible to compose a set of sequences (ZCZ sequence family) having a zero correlation zone (ZCZ) in part of a shift region of ACF/CCF.

The ZCZ sequence is a sequence in which the correlation value takes 0 in a limited shift range $\tau = -\triangle$ to $\Delta$ ($\Delta < N/2$) centered on $\tau = 0$ (excluding $\tau = 0$ as for ACF) in the whole shift range $\tau = -N/2$ to $N/2$ centered on $\tau = 0$ when using ZCZ sequence family with sequence length N (even number). Such ZCZ family can be made from a complementary sequence pair, and sometimes it is denoted by a symbol $2\Delta$-ZCZ.

Denoting a complementary sequence pair with sequence length (N/4) by [A, B], and the respective aperiodic auto-correlations with shift variable $\tau$ by R [A,A,$\tau$], R[B,B,$\tau$], they are defined as follows.

$$\hat{R}[A,A,\tau] + \hat{R}[B,B,\tau] = N/2 \quad (\tau = 0) \atop = 0 \qquad (\tau \ne 0) \biggr\} \qquad \cdots \quad (1)$$

Preparing a similar complementary sequence pair [A', B'], a pair of other sequences with sequence length N is obtained by connecting them in cascade.

$$P = (A,B,A,\bar{B}) \qquad (\bar{B} = -B)$$

$$Q = (A',B',A',\bar{B}') \qquad (\bar{B}' = -B')$$

where -B, -B' are sequences inverted in polarity of sequences B, B'.
The periodic auto-correlation and periodic cross correlation are given by the following equations.

$$R[P,P,\tau] = R[Q,Q\tau] = N \quad (\tau = 0) \atop = 0 \qquad (1 \le |\tau| \le \Delta) \biggr\} \qquad \cdots \quad (2)$$

$$R[P,Q,\tau] = 0 \qquad (|\tau| \le \Delta) \atop \Delta = N/4 \hspace{3.2cm} \Biggr\} \qquad \cdots \quad (3)$$

In this example, the family size is M = 2, but a larger size family can be produced by the same technique. It is, however, known that the value $\Delta$ is decreases according to the following equation. (The detail is given in Collected Paper 1027 of Kyushu Branch General Meeting of the Institute of Electronics, Information and Communication Engineers, 1998).

$$M = \frac{N}{2\Delta} \qquad\qquad (4)$$

In conjunction with assigning respective sequences of ZCZ sequence family to M users, such a case is considered that the sum of the delay spread width $\tau_m{}^*$ of delayed waves user signal arriving time difference $\tau_a$ of user signals arriving at the receiver may be limited to less than $\Delta$ chips, as given by the following equation.

$$\tau_v = \tau_m + \tau_\alpha \le \Delta T_c \qquad\qquad (5)$$

where $T_c$ is the chip period, and $\tau_v$ is the time variation width. In this case, intra-cell interference disturbance can be avoided. However, suppression of inter-cell interference by using the ZCZ sequences is difficult because of the limited number of available sequences. Employing the ZCZ sequences only, on the other hand, the degree of design freedom is less than required, and it is difficult to perform practical design.
The invention, in order to avoid inter-cell interface, enhance the degree of freedom, and improve the frequency utilization efficiency, discloses a structural method of zero cross correlation zone (ZCCZ) having a structure of stratified sequence family and capable of realizing a large family size, and presents CDMA systems employing this sequence family.

«Framing technique»

It is only when the interference component contained in the received frame for demodulation is composed of periodically repeated (cyclicly shifted) ZCZ sequences that a system using ZCZ sequences (also ZCCZ sequences to be mentioned below) can be processed without suffering interference.

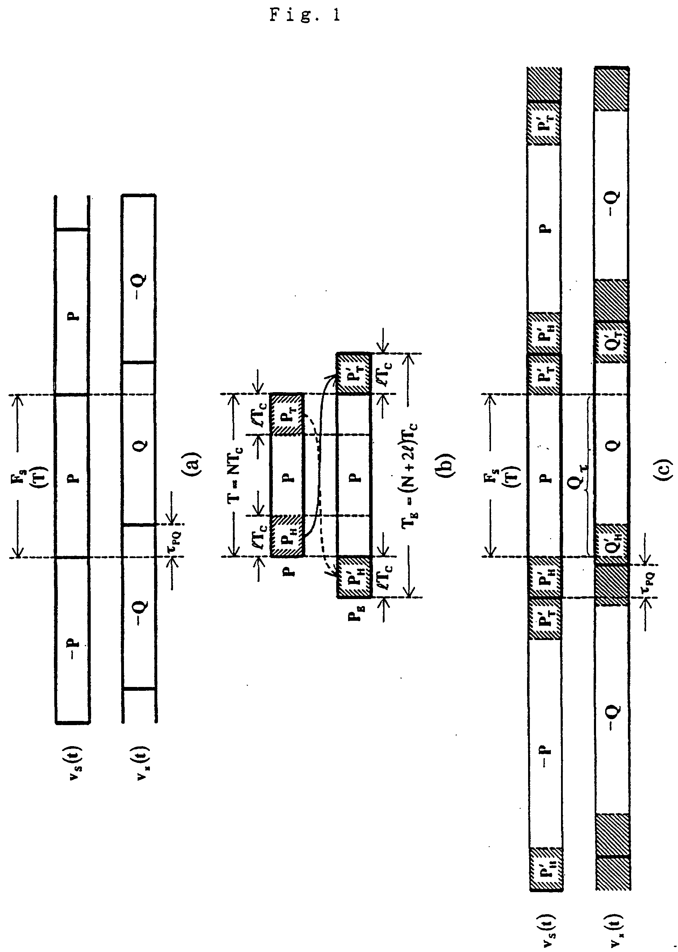

Fig. 1 (a) shows an example of composition of received frame sequences in which two users transmit their signals and a base station receiver receives them. The received input is composed of a desired wave $v_s(t)$ of sequence

P and an interference wave $v_x(t)$ of sequence Q. The polarity of each wave coming in is modulated independently by binary information as it is shown by P, - P, and Q, -Q. The frame positions of P and Q are generally different due to multi-path effect of the propagation process, and in the illustrated example, Q is delayed by $\tau_{PQ}$ as compared with P. (Herein, $\tau_{PQ}$ corresponds to $\tau_v$ in equation (5).)

When demodulating this received input, by the known synchronizing technology, a time width $F_S$ equal to the period T of P (Q) is set for the synchronously received frame. $F_S$ has the time position and time width coinciding with the received frame coming from a desired station. Generally, this synchronously received frame contains two interference wave sequences (combination of four types of Q and -Q). If the interference wave is composed of sequences of different polarities such as Q and -Q, a case of odd correlation takes place, and then the above periodic correlation equation can not be applied. That is to say, the ZCZ correlation characteristics which are consistent with only even correlation (when composed of combination of same polarity such as Q and Q) cannot be utilized. To solve this problem, the system is designed so that the time difference $\tau_{PQ}$ between the received frame positions may be limited under a threshold, and an expanded frame format to be mentioned below is used. With a down-link channel of CDMA systems for mobile communication, by transmitting a timing control signal from the base station to a mobile station, the absolute value of $\tau_{PQ}$ can be limited less than a specified value. This is called a quasi-synchronous condition.

As shown in Fig. 1 (b), by copying the heading portion ($\ell T_C$, $T_c$: chip period) and tail portion ($\ell T_C$) of the spreading sequence P, and disposing them as in the rear and front slots outside the sequence P as P'$_H$ and P'$_T$ shown in the drawing, respectively, an expanded frame $P_E$ with chip length ($N+2\ell$) is formed. That is, the spreading sequence P with N chips is converted into a spreading sequence $P_E$ with ($N+2\ell$) chips. The frame period $T_E$ of $P_E$ is given as follows.

$$\left.\begin{array}{l} T_E = (1+\alpha)\,T \\ \alpha = 2\ell/N \end{array}\right\} \qquad \cdots (6)$$

where $\alpha$ is the frame expansion rate. All the transmission frames are composed in this manner.

Fig. 1 (c) is a diagram showing a composition of expanded symbol frame sequences, in which the receiver takes out the synchronously received frame $F_s$, attempting to detect the basic sequence P in an expanded sequence $P_E$. A part of another expanded sequence $Q_E$ included in $F_S$ at this time is a cyclically shifted sequence $Q_\tau$ of the basic sequence Q. That is, it is the interference of even correlation (periodic correlation). When this shift time is less than $\Delta$, $Q_E$ does not interfere the detecting operation of P, owing to the correlation characteristics of the ZCZ sequence.. Thus, the guard sequence of $\ell$ chips added in the expanded frame has such a protecting function that the boundary of $Q_E$ and -$Q_E$ may not be contained in $F_S$.

By using the expanded frames and quasi-synchronizing technology for limiting $\tau_{PQ}$, the system using ZCZ sequence can operate without being subjected to interference. This system is effective when applied not only in up-link (asynchronous) transmission, but also in down-link (synchronous) transmission having the multi-path effect. In down-link, each user receives the respective main signals in a synchronous condition, but receives the delayed waves generated by each of them in an asynchronous condition such that the received wave position may be shifted.

«Transmitter base band circuit function»

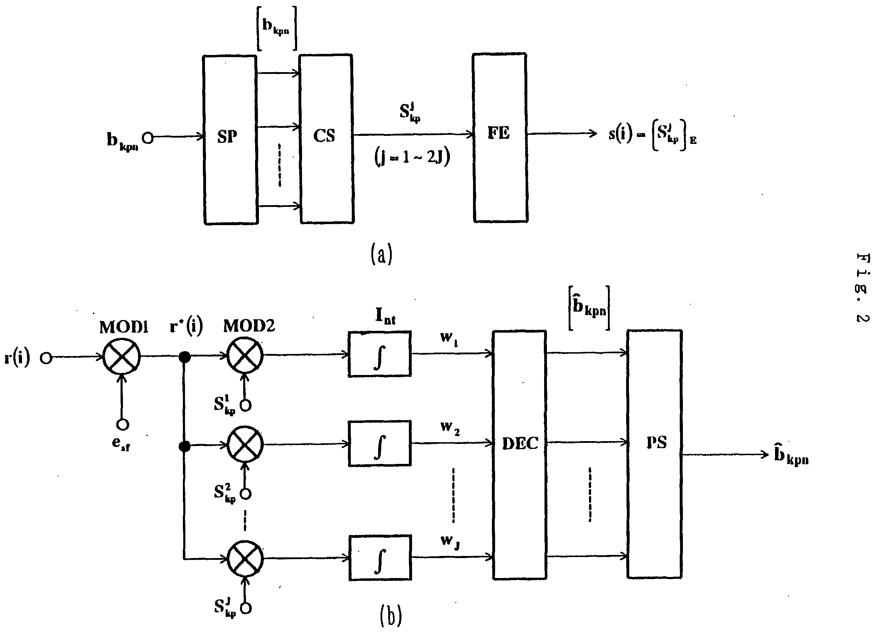

Fig. 2 is block diagrams of CDMA transmitter and receiver base band circuits in an embodiment of the invention. Fig. 2 (a) shows the transmitter circuit of the p-th user among users belonging to the k-th cell, in which $b_{kpn}$ is the n-th binary transmission information.

Now, when I bits of $b_{kpn}$ are applied to a binary-multilevel converter SP, and SP generates one of $2^l$ multilevel signals to the corresponding terminal. This output [$b_{kpn}$] is applied to a code selector CS. CS prepares in advance J pieces of spreading sequences $S_{kp}^j$ (j = 1, 2, ..., J) and the respective polarity inverted sequences, and generates an output $S_{kp}^j$ (or -$S_{kp}^j$), by mapping [$b_{kpn}$] to one of 2J (= $2^l$) sequences. $S_{kp}^j$ is applied to a frame expansion circuit FE. FE generates the expanded frame [$S_{kp}^j$]$_E$ by adding the header and tail to sequence [$S_{kp}^j$] as explained in Fig. 1. Using the time position variable i shown in Fig. 13 (a), [$S_{kp}^j$]$_E$ can be expressed as a base band transmitting output s(i).

Fig. 2 (b) shows the circuit of a receiver, in which the base station of the k-th cell receives a frame the p-th user transmitted, as a synchronously received frame of a desired station and demodulates it. In Fig. 2(b), r(i) is a received input signal, and at a modulator MOD1, the synchronously received frame r*(i) is extracted by the timing pulse $e_{sf}$. Consequently, r*(i) is applied to J pieces of modulators MOD2, and each modulator output is integrated in symbol frame period T by an integrator $I_{nt}$, and thereby J pieces of output $w_j$ are produced.

The j-th output $w_j$ is the 0-shift correlation output of r*(i) and $S_{kp}^j$, and if r*(i) = $S_{kp}^j$, then the output takes a normalized value, $w_j$ = 1. (This normalization is always adjusted by the received pilot signals.) A hard decision circuit DEC compares J pieces of the outputs, and when the j'-th absolute value $w_j$, is closest to 1 as satisfying the following equation,

$$\Delta w_j = |w_j| - 1 \\ \Delta w_j \rightarrow min \ (j = j')$$

$\cdots (7)$

it is estimated that the transmitter has transmitted $S_{kp}{}^{j'}$. The polarity of $w_j$, corresponds to the polarity of $S_{kp}{}^{j'}$.

Since the DEC output [$^\wedge b_{kpn}$] is an estimated value of the multilevel signal, by adding it to a multi-binary level converter PS, I pieces of estimated binary data $^\wedge b_{kpn}$ are produced.

Thus, a multiary transmission system for the p-th user in the k-th cell is composed. The invention is a system which uses ZCCZ sequence family as $S_{kp}{}^{j}$ so as to avoid the disturbance caused by various interference components contained in r*(i), and the production method is explained below.

[Production method of ZCCZ sequence family]

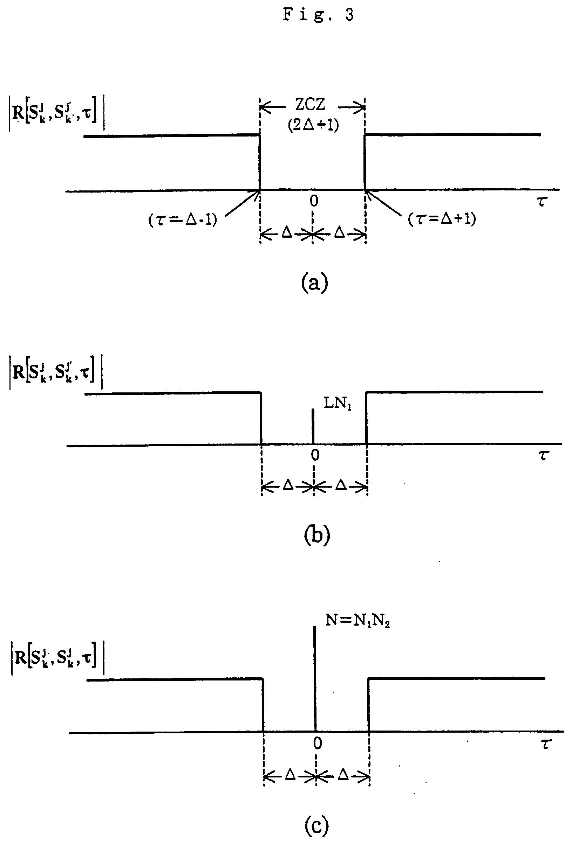

First, a set S is defined. The set S consists of K pieces of partial sets $S_k$($I \leq k \leq K$), and each partial set $S_k$ is a set composed of M pieces of element sequence $S_k{}^j$ ($I \leq j \leq M$) with length N. The periodic cross correlation characteristics of arbitrary element sequences $S_k{}^j$, $S_{k'}{}^{j'}$ which belong to mutually different partial sets $S_k$ and $S_{k'}$ ($k' \neq k$) are the same as shown in Fig. 3 (a). The periodic cross correlation characteristics of arbitrary sequences $S_k{}^j$, $S_k{}^{j'}$ which belong to the same partial sets $S_k$ are the same as shown in Fig. 3 (b). (In Fig. 3, the correlation for $|\tau| > \Delta$ is shown as a constant value, it means generally a value not being 0.) The periodic auto-correlation characteristics of these element sequences have such features as shown in Fig. 3 (c). Composing method of the sequence sets satisfying these conditions is explained.

Let a and u be positive integers, and sequences which have a sequence length $N_1 = a2^{n^*}$, the number of partial sets $K = 2^u$, and zero correlation zone (ZCZ) $2\triangle = N_1/K = a2^{n^*-u}$ are denoted by $C_k$ ($I \leq k \leq K$). Hence, consider a set C consisting of K pieces of $2\Delta$-ZCZ sequence.

$$C = \{C_1,...,C_k,...,C_k\} \tag{8}$$

where $C_k$ ($I \leq k \leq K$) is the k-th element sequence of set C. Consider another set d which consists of M pieces of sequence with sequence length $N_2$ and has the maximum Hamming distance H with set C.

$$d=\{d_1,...,d_j,...d_{j'},...d_M\} \tag{9}$$

where $d_j$, $d_{j'}$, ($I \leq j$, $j' \leq M$) are element sequences of d. The greatest common divisor of $N_1$ and $N_2$ is g. c. d ($N_1$, $N_2$) = 1, in other words, they are mutually prime. In this set d, the polarity inverted sequence of an element sequence is not included. The 0-shift cross correlation between a pair of the element sequences satisfies the following equation.

$$L=|R[d_j,d_{j'},0]|=N_2-2H \tag{10}$$

where R [$d_j$, $d_j$, $\tau$] expresses the $\tau$ shift periodic cross correlation value between sequences $d_j$ and $d_{j'}$.

Each partial set $S_k$ ($I \leq k \leq K$) of a set S = {$S_1$, ..., $S_k$, ..., ..., $S_K$} is represented as a combination of $C_k$ in equation (8) and block code d = {$d_1$, $d_j$, $d_M$} in equation (9) as follows.

$$S_k = (S_k^1, \ S_k^2, \ ...,S_k^j, \ ...,S_k^M) \tag{11}$$

$$S_k^j = C_k o d_j \tag{12}$$

where $C_k o d_j$ is a sequence composed of the product of mutually prime sequences. That is, $C_k o d_j$ is a symbol letter which means producing a sequence [$c_k N_2$] with sequence length $N = N_1 N_2$ by repeating $C_k$ $N_2$ times, and a sequence

[$d_j \cdot N_1$] with sequence length N by repeating $d_j$ $N_1$ times, and then producing a sequence $S_k^j$ with sequence length N by adding the i-th (i = 1, 2, ..., N) chip values of both sequences (in modulo 2). This addition corresponds to the product operation when using binary values (+, -), and $S_k^j$ is called the product sequence of $C_k$ and $d_j$. This is also called ZCCZ (an expanded set of binary spreading sequences).

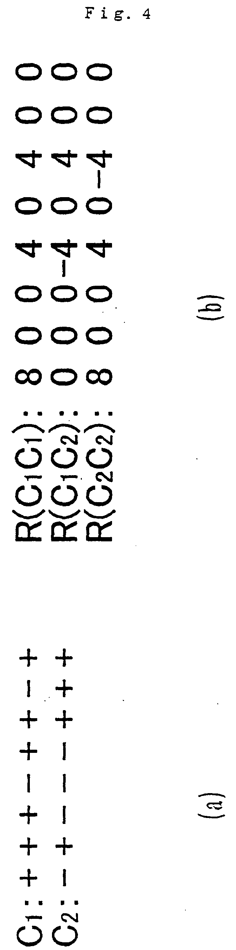

This composing method is explained with the following example. In Fig. 4, a 4-ZCZ sequence with $N_1 = 2^n = 8$ (n*=3) is represented as

$$C = \{C_1, C_2\}$$

$$C_1 = (+ + + - + + - +), \ C_2 = - (- + - - - + + +).$$

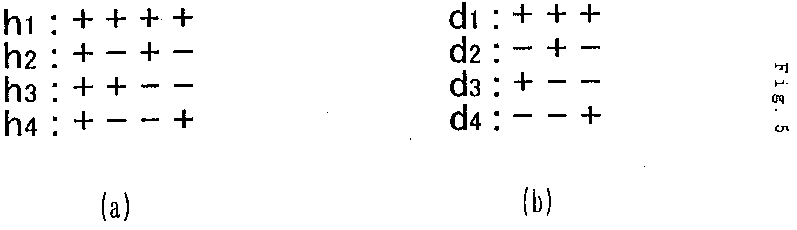

In Fig. 5 (a), excluding the first chip of an Hadamard code with sequence length 4, a block code d (partial Hadamard code) with M = 4 pieces and sequence length $N_2 = 3$ shown in Fig. 5 (b) is represented as

$$d = \{d_1, d_2 d_3, d_4\}, d_1 = (+ + +), d_2 = (- + -), \ d_3 = (+ - -), d_4 = (- - +).$$

In this example, $N_1$ and $N_2$ are mutually prime, and hence gcd $(N_1, N_2) = 1$.

Using C and d shown in Fig. 4, from equations (11) and (12), the following two partial sets composed of sequence groups with sequence length $N = N_1 N_2 = 8 \times 3 = 24$ can be derived.

$$S = \{S_1, S_2\}$$

$$\begin{aligned} S_1 &= \{S_1^1, S_1^2, S_1^3, S_1^4\} \\ &= \{C_1 o d_1, \ C_1 o d_2, \ C_1 o d_3, \ C_1 o d_4\} \\ &= \{a, c, e, g\} \end{aligned}$$

$$\begin{aligned} S_2 &= \{S_2^1, S_2^2, S_2^3, S_2^4\} \\ &= \{C_2 o d_1, C_2 o d_2, C_2 o d_3, C_2 o d_4\} \\ &= \{b, d, f, h\} \end{aligned}$$

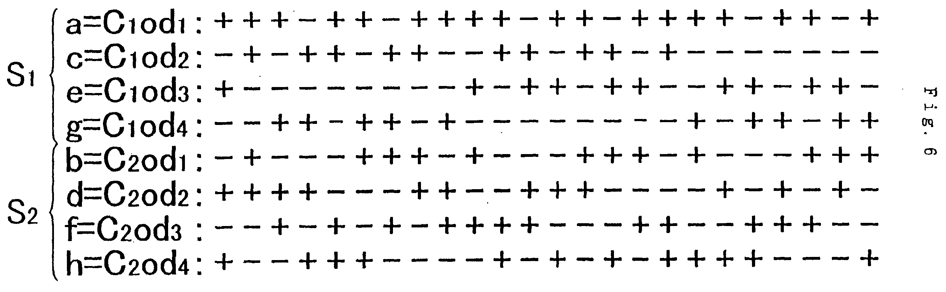

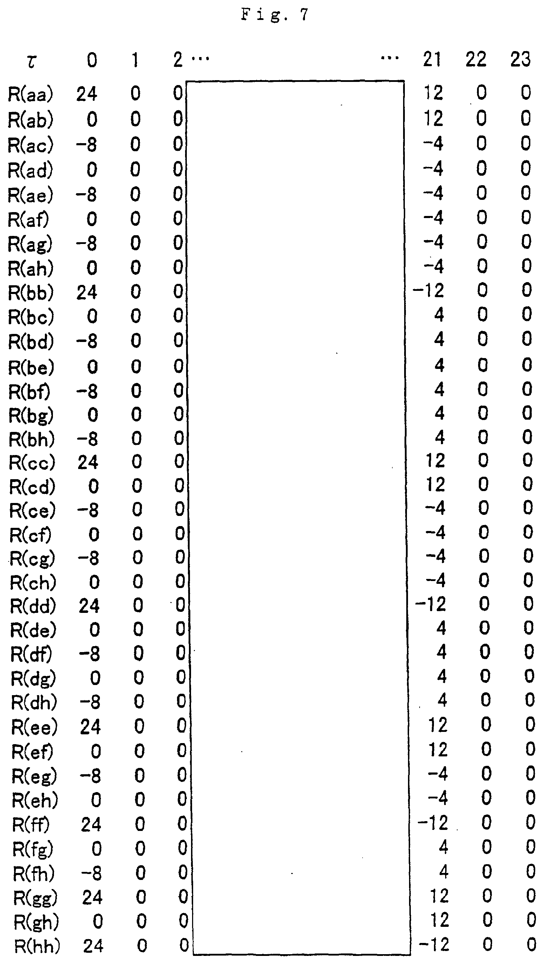

Examples of these sequences are shown in Fig. 4 to Fig. 6. Fig. 4 (a) shows a ZCZ sequence set C, and Fig. 4 (b) is its periodic correlation characteristics. Fig. 5 shows an Hadamard code H and a block code d derived from H, Fig. 6 shows a ZCCZ sequence set S produced from the sequences in Fig. 4 and Fig. 5. The correlation characteristics on set S in Fig. 6 is shown in Fig. 7. The result satisfies Eqs. (2) and (3), and the characteristics in Fig. 3.

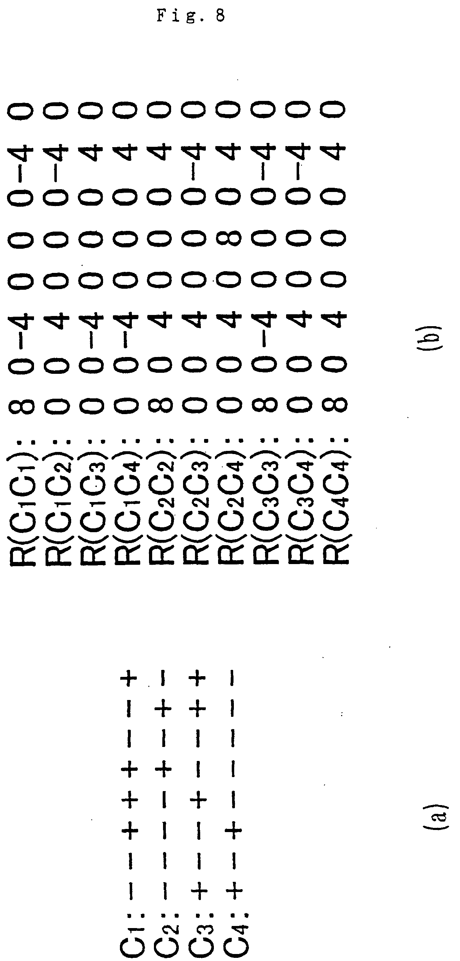

As another example of sequence sets C, 2-ZCZ sequences with sequence length $N_1 = 8$ are shown in Fig. 8. Based on an Hadamard matrix with sequence length 16, a block code with Hamming distance h = 6 can be produced. That is, using the following Hadamard matrix with sequence length $N_H = 16$,

$$H_{00} = \begin{pmatrix}
+ & + & + & + & + & + & + & + & + & + & + & + & + & + & + & + \\
+ & - & + & - & + & - & + & - & + & - & + & - & + & - & + & - \\
+ & + & - & - & + & + & - & - & + & + & - & - & + & + & - & - \\
+ & - & - & + & + & - & - & + & + & - & - & + & + & - & - & + \\
+ & + & + & + & - & - & - & - & + & + & + & + & - & - & - & - \\
+ & - & + & - & - & + & - & + & + & - & + & - & - & + & - & + \\
+ & + & - & - & - & - & + & + & + & + & - & - & - & - & + & + \\
+ & - & - & + & - & + & + & - & + & - & - & + & - & + & + & - \\
+ & + & + & + & + & + & + & + & - & - & - & - & - & - & - & - \\
+ & - & + & - & + & - & + & - & - & + & - & + & - & + & - & + \\
+ & + & - & - & + & + & - & - & - & - & + & + & - & - & + & + \\
+ & - & - & + & + & - & - & + & - & + & + & - & - & + & + & - \\
+ & + & + & + & - & - & - & - & - & - & - & - & + & + & + & + \\
+ & - & + & - & - & + & - & + & - & + & - & + & + & - & + & - \\
+ & + & - & - & - & - & + & + & - & - & + & + & + & + & - & - \\
+ & - & - & + & - & + & + & - & \mathit{5} & + & + & - & + & - & - & +
\end{pmatrix} \qquad (13)$$

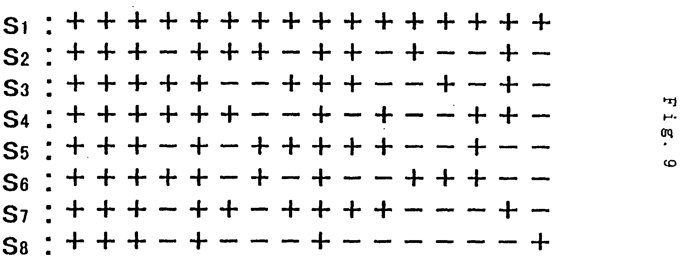

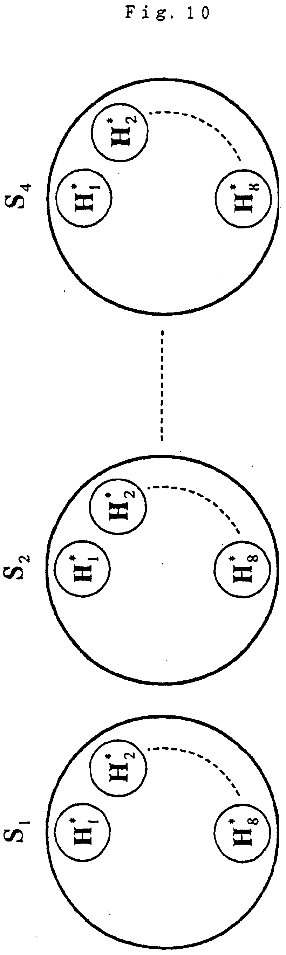

8 orthogonal matrix groups are produced, $H_1 = H_{00}[S_1]$, $H_2 = H_{00}[S_2]$, $H_3 = H_{00}[S_3]$, ..., $H_8 = H_{00}[S_8]$. These matrices $[S_1]$, $[S_2]$, ..., $[S_8]$ are of made by using sequences $s_1$, $s_2$, ..., $s_8$ shown in Fig. 9 as diagonal elements, respectively, and an example of matrix $[S_2]$ is shown below as an example.

$$[S_2] = \begin{pmatrix}
+ & & & & & & & & & & & & & & & \\
& + & & & & & & & & & & & & & & \\
& & + & & & & & & & & & & & & & \\
& & & - & & & & & & & & & & & & \\
& & & & + & & & & & & & & & & & \\
& & & & & + & & & & & & & & & & \\
& & & & & & + & & & 0 & & & & & & \\
& & & & & & & - & & & & & & & & \\
& & & & & & & & + & & & & & & & \\
& & & & & & & & & + & & & & & & \\
& & & 0 & & & & & & & - & & & & & \\
& & & & & & & & & & & + & & & & \\
& & & & & & & & & & & & - & & & \\
& & & & & & & & & & & & & - & & \\
& & & & & & & & & & & & & & + & \\
& & & & & & & & & & & & & & & -
\end{pmatrix} \qquad (14)$$

where sequence $s_p$ (p = 1, 2, ..., 8) is a sequence belonging to a sequence family having a relatively large Hamming distance between the members.

Based on these matrices Hp (p = 1, 2, ..., 8), in order to produce sequences with length $N_2$ mutually prime to $N_1$, suppose to use a $16 \times 15$ matrix $H_p^*$ which is made by excluding the first row of matrix Hp. In $H_p^*$, the j-th sequence (code word) is denoted by block code $d_{pj}$.

Thus utilizing the same manner as that in Eq. (12), ZCCZ sequence $S_{kp}{}^j$ is given by the following equation.

$$S^j_{kp} = C_k od_{pj} \qquad (15)$$

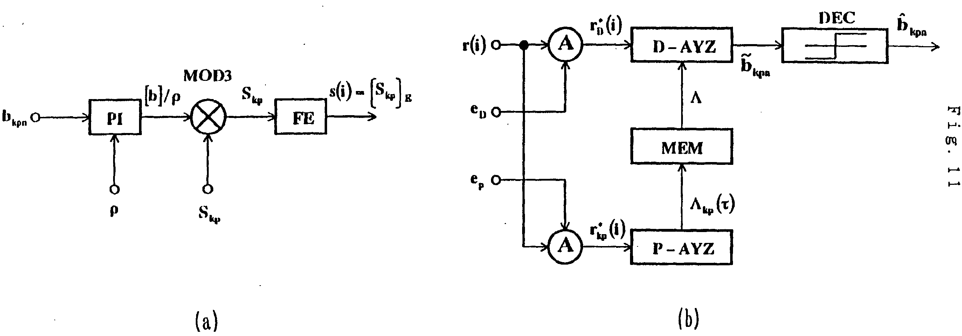

This ZCCZ sequence family has a three-layer structure as shown in Fig. 10, corresponding to the family element subscripts k, p, and j. That is, this example sequence family set is composed of:

First layer $S_k$ (k = 1, 2, ..., K) K sub-families
Second layer $H_p^*$ (p = 1, 2, ..., P) P mini-families
Third layer $S_{kp}^j$ (j = 1, 2, ..., J) J sequences where K corresponds to the number of ZCZ sequences, P to the number of Hadamard matrices, and J to the degree of Hadamard matrix. The correlation characteristics between these sequences are:

- between sub-families

$$R[S^j_{kp}, S^{j'}_{k'p'}, \tau] = 0 \ [k \neq k', |\tau| \leq \triangle] \qquad (16)$$

- between mini-families (within a sub-family)

$$R\left[S^j_{kp}, S^j_{kp'}, \tau\right] = LN_1 \qquad [p \neq p', \tau = 0]$$
$$= 0 \qquad [p \neq p', 1 \leq |\tau| \leq \Delta] \qquad \cdots (17)$$

- between sequences (within a mini-family)

$$R\left[S^j_{kp}, S^{j'}_{kp}, \tau\right] = N \qquad [j = j', \tau = 0]$$
$$= N_1 \qquad [j \neq j', |\tau| \leq \Delta] \qquad \cdots (18)$$

They correspond to the characteristics shown in Fig. 3 (a), (b), and (c), respectively.

To assign family elements k, p, and j of a ZCCZ sequence family having such correlation characteristics to the system elements (cell, user, and information level) of a CDMA mobile communication system, the following four examples are considered.

(A) K users/cell (sub-families/user) system.
This is a system of assigning $S_{kp}^j$ to the k-th user (mobile station). From the number of sequences 2PJ (including polarity inversion) available for each user, the information quantity per frame is

$$I = log_2 2PJ \qquad (19)$$

and K users are allowed to transmit I = $log_2$(2PJ) bits simultaneously by using the sequence with sequence length N. Since the correlation characteristics stated above can be achieved when using an expanded frame as mentioned previously, using the frame expansion factor $\alpha$ in Eq. (6) and $\Delta$ in Eq. (4), the number of chips (equivalent sequence length) required for sending one bit is obtained as follows:

$$\upsilon_A \frac{N(1+\alpha)}{Klog_2(2PJ)} = \frac{2\Delta N_2(1+\alpha)}{log_2(2PJ)} \qquad (20)$$

(B) KP users/cell (mini-family) system
This is a system of assigning $S_{kp}^j$ (j = 1, 2, ..., J) to the [(k-1)P+P]-th user. From the number of available sequences 2J, it leads to

$$I = log_2 2J \tag{21}$$

and hence the number of chips per bit is

$$\upsilon_B = \frac{N(1+\alpha)}{KP\ log_2(2J)} = \frac{2\Delta N_2(1+\alpha)}{Plog2(2J)} \tag{22}$$

(C) (P users/cell) $\times$ K cells (sub-families/cell) system

This is a system of assigning one of the sub-families to each cell in order to eliminate the inter-cell interference. In this case, when P users are assigned to each cell, the number of available sequences for each user is 2J, and hence

$$I = log_2 2J \tag{23}$$

and the number of chips per bit is

$$\upsilon_c \frac{N(1+\alpha)}{P\ log_2(2J)} \tag{24}$$

Therefore, the number of cells that can be assigned is given by,

$$N_c = K = N_1/(2\Delta) \tag{25}$$

(D) (J users/cell) x K cells (sub-families/cell) system

Similarly to system (C), this system is capable of eliminating the inter-cell interference, where J users are assigned to each cell, and each user can transmits a multiary modulated frame with 2P level. The same parameters as those given to (C), are derived as follows.

$$I = log_2 2P \tag{26}$$

$$\upsilon_D = \frac{N(1+\alpha)}{Jlog_2(2P)} \tag{27}$$

$$N_D = K = N_1/(2\Delta) \tag{28}$$

The transmitter of system (C) is designed with a circuit shown in Fig. 2. By changing parameters in accordance with respective systems, the other systems (A), (B) and (D) can be constructed nearly on the same configuration as shown in Fig. 2.

For these four systems, chips/bit are calculated with the parameters of the ZCCZ sequence family stated above, and are compared in Table 1.

Table 1  Example of design parameter
of ZCCZ sequence

| ZCCZ sequence parameters | $N_1=8,\ \Delta=1,\ K=4$ $N_2=15,\ P=8,\ J=16$ $L=5$ $\alpha=[2\Delta/(N_1+N_2)]=1/60$ |
|---|---|
| Information rate | $I_S=16kbps$ |

(a)  Design parameters of sequence family

| | A | B | C | D |
|---|---|---|---|---|
| $N_U$ | 4 | 32 | 8 | 16 |
| $N_M$ | 256 | 32 | 32 | 16 |
| I(bits/frame) | 8 | 5 | 5 | 4 |
| $r_m$(km) | 4.62 | 2.90 | 0.37 | 0.30 |
| $\gamma$ | 0.3 | 0.3 | 2.3 | 2.3 |
| $\nu$ (chips/bit) | 3.75 | 0.750 | 3.00 | 1.87 |

(b)  Comparison of chips/bit

For systems (A) and (B), the cell radius is determined, so as to satisfy condition $\Delta = 1$, as shown in the table.

A practical value required for $\Delta$ is represented by the following equation, assuming the maximum cell radius $r_m$ and the symbol frame period $T_D$ associated with the required information rate.

$$\Delta = \left\{\frac{\tau_v}{IT_D}\right\}N \qquad \cdots (29)$$

where $\tau_v$ is the time variation width in Eq. (5). Assume the speech transmission rate is 16 kbps, and the period is $T_D$ = 1/(16k). For an example case of multiary transmission of I = 5, the resultant symbol frame period is $T'_D = IT_D$ = 312.5 μsec. If the transmission timing of users in a cell by the base station can be controlled almost ideally, Eq. (5) results in $\tau_a \square 0$ may be reduced in Eq. (5). Therefore, for system (A), from the natural environment causing radio wave reflection in the cell, $\tau_v$ is given by the following equation.

$$\tau_v \fallingdotseq \tau'_m \fallingdotseq \gamma \tau_D r_m \qquad (30)$$

where $\gamma$ is the ratio of delay time $\tau_v$ to cell radius propagation time and $\tau_0$ is the unit propagation delay time (sec/m). Assuming $\gamma = 0.3$, from the following equation, the cell radius satisfying $\Delta = 1$ reduces $r_m$ = 4.6 km. Similarly for system (B), $r_m$ is obtained and shown in Table 1.

$$r_m = \frac{IT_D}{\gamma \tau_0 N_1 N_2} \qquad (31)$$

Now consider system (C). In this case, the influence of the maximum delay time $\tau_a$ caused by the inter-cell interference must be included in $\gamma$ in Eq. (31). Assuming $\tau_a = 2\tau_0 r_m$, it reduces $\gamma = 2.3$ and $r_m$ = 0.37 km. Similarly, $r_m$ is obtained for system (D). These system design values shown in Table 1 are of sufficiently achievable.

For operating CDMA systems, a small chips/bit ratio cannot be achieved, because the orthogonal property between the spreading sequences is not utilized sufficiently. For example, in a system called cdma-ONE, using the spreading sequences with sequence length N = 64, the symbol frame sequence is transformed into a convolutional frame sequence by aid of a convolutional code of rate R = 1/3, and then transmitted. Hence, the resultant sequence length increases to N* = 192, and it is shared by about K = 10 users. Consequently, the chips/bit ratio is about $v_E \square$

20, and any means for anti-inter-cell interference is not included. Table 1 shows far smaller values as compared with this. Because, in particular, systems (C) and (D) in Table 1 are not subjected to interference from the adjacent cells, stable performance is achieved. In systems (A) and (B) in Table 1, a certain operation allowance must be added in order to avoid inter-cell interference, therefore $\upsilon$ is forced to increase to the same degree as compared to those in the table.

In these four systems, the relation between the three elements k, p, and j characterizing the sequence types and system elements (cell, user, information level) is expressed in Table 2. Generally, however, k, p; and j may correspond to other system elements than those in Table 2. For example, k, p, and j may correspond to user, cell and information level, respectively, or to information level, user, and cell. That is, system elements can be assigned to k, p, j in an arbitrary order.

**Table 2   Relation between family elements and system elements**

| Method name \ Family element | k | p | j |
|---|---|---|---|
| (A) | User | Information level | |
| (B) | User | | Information level |
| (C) | Cell | User | Information level |
| (D) | Cell | Information level | User |

On the other hand, for systems (A) and (B), the cell assignment, one of the system elements (the same code is used by other cells) is omitted, but generally k, p, and j can be assigned in an arbitrary order to the system elements. For example, all of k, p, and j can be assigned to KPJ users, where the information level is binary. Thus, the correspondence between family elements and system elements can be freely selected depending on the system design requirement.

In system (C), family element k is assigned to a system element, cell number. In this case, instead of assigning sequence $S_{kp}{}^j$ (j = 1, 2, ..., J) to the p-th user belonging to the k-th cell, $d_{pj}$ may be assigned to the users of each cell, and the k-th ZCZ sequence $C_k$ may be assigned to all the users of the k-th cell, so that $N_2$ times repetitive sequences $[C_k]N_2$ may be used as scramble and descramble codes. That is, the p-th user belonging to the k-th cell produces a transmission frame $b[d_{pj}]N_1$ which is a frame of $N_1$ times repeated $d_{pj}$ multiplied by a binary transmission information b. Afterwards, it is multiplied by $[C_k]N_2$ as the scramble code and then transmitted. It results in producing the transmission signal $b[d_{pj}]N_1[C_k]N_2 = bS_{kp}{}^j$ from Eq. (12). On the other hand, the base station receiver first multiplies the received base band signal by $[C_k]N_2$ as the descramble code, and then despreads by a desired station sequence $[d_{pj}]N_1$, it is equivalent to despreading by $S_{kp}{}^j$. This is only the difference in management, and the same function is realized.

In these systems, the 0 shift cross correlation between mini-families is not 0 but is $LN_1$. Considering the increase in the simultaneous interference stations, and the number M' of the direct and delayed waves they generate, and the overlap in time, the following probability

$$N_1N_2 < M'LN_1 \tag{32}$$

cannot be ignored. To avoid such interference, an isolated pilot assisted analyzing system explained below may be employed at the same time.

[Isolated pilot response assisted analyzing system]

In system (C), suppose each cell includes P users. Considering up-link transmission in a cell, there is no inter-cell interference from Eqs. (15) to (17), but intra-cell interference (inter-user-interference) exists in the cell. The base station sends pilot transmission timing information to each user via the down-link. Each user transmits the pilot in a state where no data or pilot frames are transmitted from other users. Therefore, the base station receiver separately receives the synchronously received frames (synchronized with the received frame coming from the desired station) corresponding to respective pilot frames transmitted individually by both the desired station and respective interference stations, and accumulates the correlation output response $\Lambda_p(\tau)$ in the memory $\Lambda_p(\tau)$ is a correlation function with sift variable $\tau$ which is obtained as the output of a matched filter matched to, for example, the sequence assigned to the desired station 1 when a received frame $r_p$ [or expressed as rp(i) when noticing the time impulse train] corresponding to a pilot frame transmitted by the p-th user is applied to the matched filter.

Consider using of the ZCCZ sequence family shown in Fig. 6, which corresponds to K = 2, P = 4, J = 1. For example, in the first cell, as the pilot response of assigned sequence $S_{1p}$ (p = 1, 2, 3, 4), the correlation function given by the following equation is provided at the base station.

$$\Lambda_p(\tau) = r_p * S_{11} = \sum_{s=0}^{N-1} \lambda_{sp} \delta(\tau - s) \qquad \cdots (33)$$

where * is the symbol for calculating the periodic correlation function. [Here, as a matching object sequence of the matched filter, another sequence, for example, $S_{1p}$ (p≠1) may be selected.] Further, $\lambda_{SP}$ is the s (chip) shift correlation value and N is the sequence length (N = 24 from Fig. 6).

As for a data frame $r_D$ arriving at the other timing than pilot timing, the response is given by

$$\Phi(\tau) = r_D * S_{11} \qquad (34)$$

Ignoring the white noise, since the data frame response is a sum with respect p of the p-th response which is a product of $\Lambda_p(\tau)$ and the p-th user transmission information $b_p$, the following relation is derived.

$$\Phi(\tau) = \sum_{p=1}^{4} b_p \Lambda_p(\tau) \qquad \cdots (35)$$

Therefore, representing $\Lambda_p(\tau)$ *(τ = 0 to 3)* by a matrix $[\Lambda]$, we obtain

$$[\Lambda]\,[\bar{b}] = [\Phi] \qquad \cdots (36)$$

where $-b_p$ is an analyzed and estimated data transmitted from the p-th user.

In addition, instead of using spreading sequence for the desired station (reference sequence) $S_{11}$ in Eqs. (33) and (34), generally, a spreading sequence with the same sequence length can be utilized. If using an auto-orthogonal sequence instead of $S_{11}$, there is an advantage such that an error deviation included in the estimated values $-b_p$ (an error average from the correct value) due to white noise included in the input frame $r_D$ can be estimated from the matrix $[\Lambda]$. An example of auto-orthogonal sequences is a maximum length sequence with added direct-current component.

Referring to the correlation characteristics of this sequence family shown in Fig. 7, the first line of $[\Lambda]$ is $\lambda_{00}$ = 24, $\lambda_{op}$ = 8 (p ≠ 0), but when $\sim b_1$ is obtained as a solution from the above equation, it is not subjected to the disturbance due to $\lambda_{op}$ (p≠0). Further, parameters on the second and third lines, when satisfying the shift range $|\tau| \leq \Delta$ (=2), are 0, resulting in simplifying the matrix. It makes the analysis less susceptible to the white noise. That is, using the ZCCZ sequence and isolated pilot analyzing method, the interference component between users can be analyzed and estimated more precisely, and even in the case of $\lambda_{op} \neq 0$ [$\lambda_{op}$ = LN$_1$ in Eq. (17)], a system so as to reduce the error rate can be achieved.

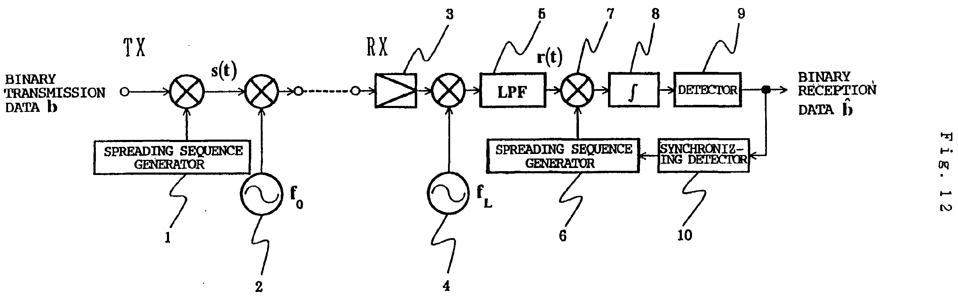

Fig. 11 is a block diagram of the base band circuits of CDMA transmitter-receiver in an embodiment of the invention, and the circuits can perform the isolated pilot assisting function mentioned above. Fig. 11 (a) is a circuit diagram of the transmitter, in which $b_{kpn}$ is the same as the symbol used in Fig. 2(a), and is the n-th binary transmission information. Further, $\rho$ is the pilot information, and, for example, always $\rho$ = 1. A pilot insertion circuit PI inserts $\rho$ into the transmission information sequence [b] of $b_{kpn}$ periodically at a certain frequency. A modulator MOD3 determines the polarity of the spreading sequence $S_{kp}$ assigned to this user according to the respective bit information output [b] /$\rho$ PI produces. This output is sent to a frame expansion circuit FE, in which spreading sequence $b_{kp}$ $[S_{kp}(i)]_E$ is produced. Therefore, the transmission signal is represented by the following equation.

$$s(i) = b_{kp}[S_{kp}(i)]_E \qquad (38)$$

where for the sake of simplicity, the symbol frame number n is omitted, and $b_{kp}$ is used by assuming J = 1 for $S_{kp}{}^j$.

Fig. 11 (b) is a base band receiver circuit, in which r(i) is a received input, A is a gate, and $e_D$ and $e_p$ are timing signals for separating the general data frames and the isolated pilot frames on the synchronously received frames. The synchronous reception gate output $r_{kp}{}^*(i)$ is an input corresponding to the pilot signal transmitted by the p-th user of the k-th cell, and an analyzer P-AYZ analyzes it, and produces the correlation function output $\Lambda_{kp}(\tau)$. Here, because that intra-cell interference between users exists, but there is no inter-cell interference (k may be a constant), P pieces of $\Lambda_{kp}(\tau)$ are obtained. They are accumulated in a memory MEM in a form of matrix $\Lambda$ in Eqs. (36) and (37).

On the other hand, the synchronous reception gate output $r_D{}^*(i)$ is a symbol frame bearing transmission information $b_{kpn}$. An analyzer D-AYZ analyzes $r_D{}^*(i)$ based on Eq. (37), using the matrix stored in MEM. The output ~$b_{kpn}$ is applied to the hard decision circuit DEC which outputs the detection output ^$b_{kpn}$. In this circuit, the interference between users is eliminated, and received code error rate is reduced.

As explained in detail above, the invention presents means for generating families of ZCCZ sequences which have a stratified structure capable of flexibly adapting with design requirements on system elements, and have a zero correlation zone in the cross correlation characteristics, on the basis of a ZCZ sequence set having zero correlation zone in its correlation characteristics and a block code set with a large Hamming distance, and further presents means for avoiding interference disturbance caused by signal waves transmitted from other users in the cell or from users belonging to other cells, and further interference disturbance caused by multiple delayed waves generated by transmitted waves addressed to a desired station, by assigning this ZCCZ sequence family to each user as the spreading sequence for transmission within a cell in a mobile communication system, or assigning to the users in respective cells as the spreading sequence for multi-cell transmission for plural cells, and employing an expanded frame structure and assuring quasi-synchronous conditions. By employing such means together with the isolated pilot response assisted analysis system, the invention further presents means for avoiding cross correlation between sequences of the sequence family. Therefore, when the invention is applied to a mobile communications system or wireless LAN, owing to its interference avoiding characteristics, it is possible to construct a system which achieves a low received code error rate and high frequency utilization efficiency, bringing about outstanding effects.

**Claims**

1. A CDMA communication system, wherein a transmitter comprises means for preparing binary ZCCZ spreading sequences belonging to a family of sequence groups in which no periodic cross correlation function between an arbitrary pair of the spreading sequences exists for a correlation function region near 0 shift, as mutually different spreading sequences for identifying users, means for producing an expanded symbol frame which is made by adding guard sequences to both sides of the ZCCZ sequence that is the central frame, and means for producing a transmission base band symbol frame by multiplying the expanded symbol frame by a transmission information, and a receiver comprises means for receiving the received base band symbol frame corresponding to the transmitted base band symbol frame, and means for demodulating the received frame in correlation with the ZCCZ spreading sequence used by the transmitter of a desired station or a local sequence for demodulation as reference sequence, and hard decision making of the demodulated output.

2. The CDMA communication system of claim 1, wherein each user transmitter belonging to a communication system comprises means for transmitting an isolated pilot frame, and a base station receiver comprises means for producing respective cross correlation function responses of the isolated pilot frames incoming from the user transmitters with an arbitrary spreading sequence or an auto-orthogonal sequence, and means for producing a demodulated output by analyzing the received base band frame with the cross correlation function response set.

3. A CDMA communication system comprising, in order to produce the ZCCZ spreading sequence used in the first aspect, means for preparing one sequence of sequence length $N_1$ belonging to a ZCZ sequence family of which periodic auto-correlation function has no auto-correlation region at both sides of the 0 shift, and of which periodic cross-correlation function between an arbitrary pair of sequences has no correlation region at both sides of the 0 shift, including the 0 shift, and for preparing a block sequence d with sequence length $N_2$ that is prime to $N_1$, which belongs a semi-orthogonal sequence family of which Hamming distance between an arbitrary pair of the sequences takes a relatively large value, and producing a repetitive ZCZ sequence and a repetitive block sequence by repeating both sequences so as to take a product sequence length N that is $N_1$ times $N_2$, and producing in advance a product sequence with sequence length N by multiplying both the repetitive sequences on the respective corresponding chip positions, in which the product sequence is used as the ZCCZ spreading sequence.

4. The CDMA communication system of claim 3, wherein the product sequence $S_{kp}{}^j$ is assigned to a system in a method of making the block sequence d hierarchical with a sub-block matrix $H_p{}^*$ (p = 1, 2, ..., P), producing a family of product sequence $S_{kp}{}^j$ made of the j-th (j = 1, 2, ..., J) block sequence $d_{pj}$ belonging to $H_p{}^*$ and the k-th (k = 1, 2, ... , K) ZCZ sequence $C_k$ belonging to the ZCZ sequence family, and providing the stratified family elements k, p, and j with the system elements of cell number, user number, and transmission information level in an arbitrary order.

5. The CDMA communication system of claim 4, wherein the product sequence $S_{kp}{}^j$ is assigned to the system in a method of providing a combined family composed of one to three elements of stratified family elements k, p, j with one system element, and a combined family composed of the remaining elements with other system elements.

6. The CDMA communication system of claim 4 or 5, wherein the sequence corresponding to the family element assigned to the cell number of system elements is used as scramble code for transmission and descramble code for reception.

Fig. 1

$b_{kpn}$ ○ → SP → [$b_{kpn}$] → CS → $S_{kp}^j$ ($j = 1 \sim 2J$) → FE → $s(i) = \left[S_{kp}^j\right]_E$

(a)

$r(i)$ ○ → MOD1 → $r'(i)$ → MOD2 → $I_{nt}$ ∫ → $w_1$ → DEC → [$\hat{b}_{kpn}$] → PS → $\hat{b}_{kpn}$

$e_{sf}$

$S_{kp}^1$ ○

∫ → $w_2$

$S_{kp}^2$ ○

∫ → $w_J$

$S_{kp}^J$ ○

(b)

Fig. 2

18

Fig. 3

(a)

(b)

(c)

Fig. 4

$R(C_1C_1)$: 8 0 0 4 0 4 0 0

$R(C_1C_2)$: 0 0 0 -4 0 -4 0 0

$R(C_2C_2)$: 8 0 0 4 0 -4 0 0

(b)

$C_1$: + + + + + + - +

$C_2$: - + - + + + + +

(a)

Fig. 5

$h_1 : + + + +$
$h_2 : + - + -$
$h_3 : + + - -$
$h_4 : + - - +$

(a)

$d_1 : + + +$
$d_2 : - + -$
$d_3 : + - -$
$d_4 : - - +$

(b)

$S_1 \begin{cases} a = C_1 o d_1 : + + + - + + - + + + - + + - + + + - + + - + \\ c = C_1 o d_2 : - + - + + - + + - - + + - + + - + - - - - - - \\ e = C_1 o d_3 : + - - - - - - - + - + + - + + - - + + - + + - \\ g = C_1 o d_4 : - - + + - + + - + - - - - - - - + - + + - + + \end{cases}$

$S_2 \begin{cases} b = C_2 o d_1 : - + - - + + + - + - - - + + + - + - - - + + + \\ d = C_2 o d_2 : + + + + - - - + + - - + + + - - - - + - + - + - \\ f = C_2 o d_3 : - - + - + - + - + + + + - - - + + - - + + + - - \\ h = C_2 o d_4 : + - - + + + - - - - + - + - + - + + + + - - - + \end{cases}$

Fig. 6

Fig. 7

| τ | 0 | 1 | 2 ⋯ | ⋯ | 21 | 22 | 23 |
|---|---|---|---|---|---|---|---|
| R(aa) | 24 | 0 | 0 | | 12 | 0 | 0 |
| R(ab) | 0 | 0 | 0 | | 12 | 0 | 0 |
| R(ac) | −8 | 0 | 0 | | −4 | 0 | 0 |
| R(ad) | 0 | 0 | 0 | | −4 | 0 | 0 |
| R(ae) | −8 | 0 | 0 | | −4 | 0 | 0 |
| R(af) | 0 | 0 | 0 | | −4 | 0 | 0 |
| R(ag) | −8 | 0 | 0 | | −4 | 0 | 0 |
| R(ah) | 0 | 0 | 0 | | −4 | 0 | 0 |
| R(bb) | 24 | 0 | 0 | | −12 | 0 | 0 |
| R(bc) | 0 | 0 | 0 | | 4 | 0 | 0 |
| R(bd) | −8 | 0 | 0 | | 4 | 0 | 0 |
| R(be) | 0 | 0 | 0 | | 4 | 0 | 0 |
| R(bf) | −8 | 0 | 0 | | 4 | 0 | 0 |
| R(bg) | 0 | 0 | 0 | | 4 | 0 | 0 |
| R(bh) | −8 | 0 | 0 | | 4 | 0 | 0 |
| R(cc) | 24 | 0 | 0 | | 12 | 0 | 0 |
| R(cd) | 0 | 0 | 0 | | 12 | 0 | 0 |
| R(ce) | −8 | 0 | 0 | | −4 | 0 | 0 |
| R(cf) | 0 | 0 | 0 | | −4 | 0 | 0 |
| R(cg) | −8 | 0 | 0 | | −4 | 0 | 0 |
| R(ch) | 0 | 0 | 0 | | −4 | 0 | 0 |
| R(dd) | 24 | 0 | 0 | | −12 | 0 | 0 |
| R(de) | 0 | 0 | 0 | | 4 | 0 | 0 |
| R(df) | −8 | 0 | 0 | | 4 | 0 | 0 |
| R(dg) | 0 | 0 | 0 | | 4 | 0 | 0 |
| R(dh) | −8 | 0 | 0 | | 4 | 0 | 0 |
| R(ee) | 24 | 0 | 0 | | 12 | 0 | 0 |
| R(ef) | 0 | 0 | 0 | | 12 | 0 | 0 |
| R(eg) | −8 | 0 | 0 | | −4 | 0 | 0 |
| R(eh) | 0 | 0 | 0 | | −4 | 0 | 0 |
| R(ff) | 24 | 0 | 0 | | −12 | 0 | 0 |
| R(fg) | 0 | 0 | 0 | | 4 | 0 | 0 |
| R(fh) | −8 | 0 | 0 | | 4 | 0 | 0 |
| R(gg) | 24 | 0 | 0 | | 12 | 0 | 0 |
| R(gh) | 0 | 0 | 0 | | 12 | 0 | 0 |
| R(hh) | 24 | 0 | 0 | | −12 | 0 | 0 |

Fig. 8

$C_1$ : — — + + + — — +
$C_2$ : — — — — + — + —
$C_3$ : + — — + — — + +
$C_4$ : + — + — — — — —

(a)

$R(C_1C_1)$ :  8  0 -4  0  0  0 -4  0
$R(C_1C_2)$ :  0  0  4  0  0  0 -4  0
$R(C_1C_3)$ :  0  0 -4  0  0  0  4  0
$R(C_1C_4)$ :  0  0 -4  0  0  0  4  0
$R(C_2C_2)$ :  8  0  4  0  0  0  4  0
$R(C_2C_3)$ :  0  0  4  0  0  0 -4  0
$R(C_2C_4)$ :  0  0  4  0  8  0  4  0
$R(C_3C_3)$ :  8  0 -4  0  0  0 -4  0
$R(C_3C_4)$ :  0  0  4  0  0  0 -4  0
$R(C_4C_4)$ :  8  0  4  0  0  0  4  0

(b)

Fig. 9

Fig. 10

Fig. 11

(b)

(a)

Fig. 12

TX

BINARY
TRANSMISSION
DATA **b**

s(t)

RX

3

5

r(t)

7

8

9

LPF

∫

DETECTOR

BINARY
RECEPTION
DATA **b̂**

SPREADING SEQUENCE
GENERATOR

$f_0$

$f_L$

SPREADING SEQUENCE
GENERATOR

SYNCHRONIZ-
ING DETECTOR

1

2

4

6

10

Fig. 13

(a)

(b)

(c)

## INTERNATIONAL SEARCH REPORT

| International application No. |
| --- |
| PCT/JP00/06138 |

A. CLASSIFICATION OF SUBJECT MATTER
    Int.Cl⁷ H04J13/04, H04B1/707

According to International Patent Classification (IPC) or to both national classification and IPC

B. FIELDS SEARCHED

Minimum documentation searched (classification system followed by classification symbols)
    Int.Cl⁷ H04B1/69-1/713, H04J13/00-13/06

Documentation searched other than minimum documentation to the extent that such documents are included in the fields searched

| Jitsuyo Shinan Koho | 1926-1996 | Toroku Jitsuyo Shinan Koho | 1994-2000 |
| Kokai Jitsuyo Shinan Koho | 1971-2000 | Jitsuyo Shinan Toroku Koho | 1996-2000 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP, 10-98444, A (Katsuyoshi AZEYANAGI),<br>14 April, 1998 (14.04.98),<br>Full text; Figs. 1 to 9<br>& WO, 98/12831, A1 & AU, 9743182, A<br>& EP, 869632, A1 & CN, 1205143, A | 1<br>2<br>3-6 |
| X<br>Y<br>A | JP, 10-285136, A (Kazuo TSUBOUCHI),<br>23 October, 1998 (23.10.98),<br>Full text; Figs. 1 to 35 (Family: none) | 1<br>2<br>3-6 |
| X<br>Y<br>A | JP, 10-294715, A (Kazuo TSUBOUCHI),<br>04 November, 1998 (04.11.98),<br>Full text; Figs. 1 to 36 (Family: none) | 1<br>2<br>3-6 |
| Y | Mitsuhiro TOMITA, et al., "Gold Keiretsu wo mochiita Pilot Frame Shienkei CDMA Tsushin Houshiki", Technical Research Report, the Institute of Electronics, Information and Communication Engineers, Vol.99, No.124, SST99-7, 18 June, 1999 (18.06.99), (Tokyo) pp.41-48 | 2 |

☒ Further documents are listed in the continuation of Box C.  ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>    05 December, 2000 (05.12.00) | Date of mailing of the international search report<br>    12 December, 2000 (12.12.00) |
| --- | --- |
| Name and mailing address of the ISA/<br>    Japanese Patent Office | Authorized officer |
| Facsimile No. | Telephone No. |

Form PCT/ISA/210 (second sheet) (July 1992)

# EP 1 143 651 A1

## INTERNATIONAL SEARCH REPORT

International application No.

PCT/JP00/06138

C (Continuation).   DOCUMENTS CONSIDERED TO BE RELEVANT

| Category* | Citation of document, with indication, where appropriate, of the relevant passages | Relevant to claim No. |
|---|---|---|
| P,X<br>P.A | Shinya MATSUFUJI, et al., "Fugou kan Kanshou no nai Kinji Douki  M-aryCDMA Houshiki Kakusan Fugou no Kousei", Technical Research Report, the Institute of Electronics, Information and Communication Engineers, Vol.99, No.341, SST99-39, 29 September, 1999 (29.09.99),(Tokyo) pp.53-58 | 1-3<br>4-6 |
| A | JP, 7-143110, A (Daiei Electronics K.K.), 02 June, 1995 (02.06.95), Full text; Figs. 1 to 5   (Family: none) | 1-6 |

Form PCT/ISA/210 (continuation of second sheet) (July 1992)